# EUROPEAN PATENT APPLICATION

(11) **EP 4 804 424 A1**
(43) Date of publication of application: **09.09.2026**
(21) Application number: 25161901.1
(22) Date of filing: 05.03.2025
(51) Int. Cl.: H04B 7/06, H04B 1/10, H04B 1/16

(54) **MIMO COMPATIBLE ANALOG BEAMFORMING**

(71) Applicant: NXP B.V., 5656 AG Eindhoven (NL)
(72) Inventor: ZHU, Zitao, 5656AG Eindhoven (NL); GANZARLI, Marcello, 5656AG Eindhoven (NL); CIACCI, Massimo, 5656AG Eindhoven (NL); LIU, QILONG, 5656AG Eindhoven (NL); BAJORIA, Shagun, 5656AG Eindhoven (NL); BREEMS, Lucien Johannes, 5656AG Eindhoven (NL); RADULOV, Georgi, 5656AG Eindhoven (NL)
(74) Representative: Schwarzweller, Thomas

(57) **Abstract**

An apparatus and method for beam steering an antenna array for a MIMO receiver. A signal output and at least one phase shifted output is produced for each antenna element in a MIMO antenna array that receives a phase shift control input, where the at least one phase shifted output is phase shifted relative to the signal output based upon the phase shift control input. A plurality of combined signals is produced for input to a MIMO receiver, where each combined signal is produced for a group of antenna elements and where each respective combined signal includes a combination of: a signal output of a first antenna element and a phase shifted output of at least a second antenna element. A phase shift control input is produced that creates a reduced antenna gain pattern in a direction of a detected strong signal for each respective pair of antenna elements.

## Description

### BACKGROUND

### Field

Embodiments of the present disclosure generally relate to radio frequency (RF) antennas, and more particularly relate to processing of received signals to modify antenna gain patterns while supporting Multiple Input Multiple Output (MIMO) processing of received signals.

### Related Art

Radio receivers often perform digital processing of received signals to extract information. One application that uses digital processing of received signals is Multiple Input Multiple Output (MIMO) radio systems such as MIMO radar systems that transmit and received Frequency Modulated Continuous Wave (FMCW) signals. Such MIMO receivers contain one receiver for each RF stream produced by the receive antennas of the antenna array. The antenna elements in that array of antenna elements are in general able to receive RF signals that arrive at the antenna from a wide range of angles. In some instances, some received RF signals may have a high power level that is significantly greater than other signals. In conventional systems, the received signal is processed by RF signal components to produce a baseband signal that is converted to a time series of digitized samples by an Analog-to-Digital Converter (ADC). Properly processing received RF signals with a high power level while retaining information contained in weaker signals of interest generally requires a receiving system with a large dynamic range.

### BRIEF DESCRIPTION OF THE DRAWINGS

Embodiments of the present disclosure are illustrated by way of example and are not limited by the accompanying figures, in which like references indicate similar elements. Elements in the figures are illustrated for simplicity and clarity and have not necessarily been drawn to scale.
FIG. 1 illustrates a MIMO system with analog beam forming, according to an example.
FIG. 2 illustrates a phase shifter and signal combiner, according to an example.
FIG. 3 illustrates a signal combining arrangement, according to an example.
FIG. 4 illustrates a MIMO antenna array layout, according to an example.
FIG. 5 illustrates a 2X4 MIMO antenna array RF combining arrangement, according to an example.
FIG. 6 illustrates an analog beamforming process, according to an example.
FIG. 7 illustrates a strong signal direction of arrival determination process, according to an example.

### DETAILED DESCRIPTION

The below described systems and methods provide analog Radio Frequency (RF) beamforming circuits that operate to realize antenna patterns for combinations of antenna elements within a Multiple Input, Multiple Output (MIMO) antenna array. The analog RF beamforming operates to realize a number of virtual antenna elements where each virtual antenna element produces an RF signal that is provided as an input to MIMO receiver. Each of these virtual antenna elements produce a separate combined signal that consists of an RF signal received by one real antenna element in the MIMO antenna array that is combined with a phased shifted RF signal that is received by another real antenna element in the MIMO antenna array. Each such combination of antenna elements in the following description is referred to as a MIMO antenna element group. Each MIMO antenna element group has a receive pattern that is a product of two factors: the single element radiation pattern, and an array factor of the antenna group. In the following discussion, the array factor is defined by a function of the beamforming complex weights. In the following discussion, a "receive array pattern" refers to the receive pattern of each MIMO element group. In contrast to conventional MIMO processing where there is no array factor due to the MIMO modulation, the below described MIMO antenna element groups within a MIMO antenna array have such an array factor. Each of these virtual antenna elements has a reduced receive array pattern in a direction of a received RF signal that is received with higher power than other signals of interest. By reducing the receive array pattern in a direction of a strong RF signal, the dynamic range for an Analog to Digital Converter (ADC) that digitizes the baseband signal for the signal received by the MIMO antenna element group is advantageously reduced relative to the dynamic range that would capture the strong RF signal and retain information contained in weaker signals received from different directions. The below described systems and methods combine the composite beamforming processing with MIMO receiver processing in order to advantageously provide effective MIMO radar object characterization, such as determination of distance, direction of arrival (DOA), other quantities, or combinations of these.

Multi-Input Multi-Output (MIMO) Frequency Modulated Continuous Wave (FMCW) radar systems (referred to herein as MIMO radar systems) use a MIMO antenna array to simultaneously transmit and receive Radio Frequency (RF) signals. The MIMO radar systems receive RF signals reflected by one or more objects in view of the MIMO antenna array and processes those received RF signals to determine properties of the one or more objects detected by the radar system. In general, these one or more objects contain multiple objects are able to include some objects that produce strong reflections and other objects that produce weaker reflections.

In order to effectively capture received MIMO RF signals to support proper MIMO processing of both strong and weaker signal reflections from various objects within view of a MIMO radar systems, conventional MIMO radar systems often include receiver front end components that have a large dynamic range. Receiver front end designs that exhibit large dynamic range increase costs of such front end circuits. Such front end circuits are replicated for each receive signal stream and as the number of receiver antennas, and thus the number of front end circuits, becomes larger, the increased costs of such front end circuits can become quite large. Higher dynamic range front end circuits are also incorporated in some designs to properly process interference signals, such as signals transmitted by other radars or other types of systems that includes the same RF frequency range that is received by the MIMO system. Such interference signals are able to be received with higher power than signals reflected by objects reflecting signals transmitted by the MIMO radar system.

One component that can limit the overall dynamic range of a MIMO front end system is its Analog to Digital Converter (ADC). A specification relevant for ADC performance is the spurious free dynamic range (SFDR) of the ADC, which is proportional to the number of data bits that are produced for each sample of signal being digitized. Using ADCs with high SFDR in a system design can introduce circuit complexity, higher costs, and higher electrical power consumption relative to system designs that use ADCs with lower SFDR.

In order to advantageously reduce the SFDR of ADCs incorporated into MIMO receivers, the below described systems and methods incorporate analog beamforming to create a spatially formed receive antenna pattern for the MIMO antenna array that has reduced antenna gain in a direction of a relatively strong RF signal that is received by the MIMO antenna array. The operation of analog beamforming produces a receive antenna pattern for the MIMO antenna array that is a reduced receive array pattern. In an example, a reduced receive array pattern has a "notch" where notch refers to an angular region in a particular direction from the MIMO antenna array wherein the receive array pattern is reduced. Such analog beamforming is performed on received signals prior to processing of the received signals by ADCs. The below described systems and methods combine such analog beamforming with MIMO signal processing in a way that retains the effectiveness of the MIMO signal processing to determine characteristics for objects reflecting signals transmitted by the MIMO radar system.

Simulations have indicated that the below described systems and methods are able to operate to provide a fifty (50) dB array factor attenuation in a particular direction for a MIMO antenna array operating in a vicinity of eighty (80) Gigahertz (GHz) with an FMCW bandwidth of up to two hundred (200) Megahertz (MHz). The below described systems and methods are able to be applied to MIMO radar systems with any number of antenna elements in a MIMO antenna array that has more than two (2) receive antenna elements.

The below described systems and methods are able to use any technique to determine the direction of arrival for a strong RF signal. Some example techniques are described below. In an example, a direction of arrival for a strongest signal is determined by operating the MIMO antenna array to create a narrower receiver array factor gain lobe that is spatially scanned while receiving a signal to determine at which angle the higher antenna receive gain lobe receives a strong signal. Once this direction is determined, phase delay values for the receive antenna elements within the antenna array that produce a notch in that direction are determined and applied to the antenna elements.

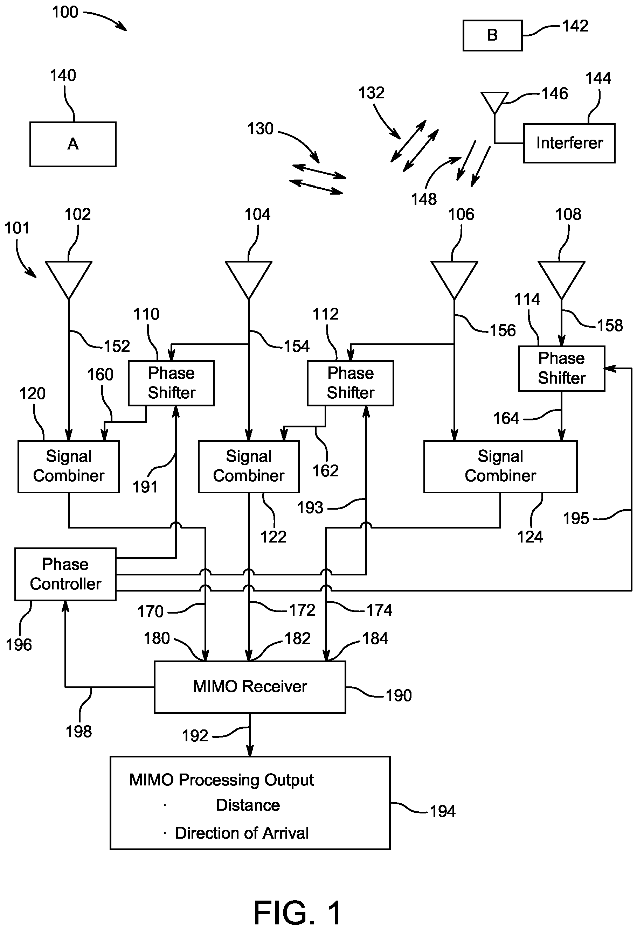

FIG. 1 illustrates a MIMO system with analog beam forming 100, according to an example. In order to simplify the presentation of relevant aspects of the described systems and methods, the MIMO system with analog beam forming 100 illustrates the receive portion of a MIMO system. It is to be understood that a practical MIMO system is also able to include signal generation components to generate transmitted waveforms, further signal processing components, other components, or combinations of these.

The illustrated MIMO system with analog beam forming 100 includes a MIMO antenna array 101 that includes four (4) receive antenna elements, a first antenna element 102, a second antenna element 104, a third antenna element 106, and a fourth antenna element 108. The illustrated MIMO antenna array 101 is an example of a plurality of antenna elements arranged for MIMO operations and depicts four (4) antenna elements to simplify the description of relevant aspects of the MIMO system with analog beam forming 100. It is to be understood that further examples are able to include a MIMO antenna array with three or more receive antenna elements.

The MIMO system with analog beam forming 100 depicts two objects, a first object A 140 and a second object B 142, that are detected and characterized by the MIMO system. The first object A 140 is depicted as being larger than the second object B 142 and the first object A 140 in the illustrated example is also closer to the MIMO antenna array 101 than the second object B 142.

The MIMO system with analog beam forming 100 depicts two MIMO radar signals, a first MIMO radar signal 130 and a second MIMO radar signal 132. These two MIMO radar signals are transmitted by transmitters (not shown) that are associated with this MIMO system. The first MIMO radar signal 130 is reflected by the first object A 140 and that reflection is received by the MIMO antenna array 101. The second MIMO radar signal 132 is reflected by the second object B 142 and is also received by the MIMO antenna array 101. Because the first object A 140 is closer to the MIMO antenna array 101 than the second object B 142, and the first object A 140 is larger than the second object B 142, the MIMO antenna array 101 receives the first MIMO radar signal 130 with a greater received power level than the second MIMO radar signal 132.

The MIMO system with analog beam forming 100 depicts an interferer 144 that has an interferer antenna 146. In this example, the interferer 144 transmits an interfering signal 148 via the interferer antenna 146. The interfering signal 148 in this example is transmitted to the MIMO antenna array 101 and is received by the MIMO antenna array 101 with a higher received power level than the first MIMO radar signal 130 or the second MIMO radar signal 132.

Each antenna element within the MIMO antenna array 101 produces a respective antenna stream input. The first antenna element 102 produces a first antenna stream input 152, the second antenna element 104 produces a second antenna stream input 154, the third antenna element 106 produces a third antenna stream input 156, and the fourth antenna element 108 produces a fourth antenna stream input 158. Each of these antenna stream inputs is an example of a respective antenna stream input. As described in further detail below, the MIMO system with analog beam forming 100 operates to combine the signal output of pairs of antenna elements in the MIMO system with analog beam forming 100 to produce combined signals. Each of these combined signals is a signal that is received according to the antenna pattern that is created when outputs of a respective group of antenna elements is combined. As described below, the illustrated MIMO system with analog beam forming 100 combines the outputs of groups of antenna elements by phase shifting the signal output produced by one or more antenna elements and adding those phase shifted signal outputs to a signal output produced by another antenna element. In order to simplify the description of relevant concepts, the following description details the design and operation of MIMO antenna element groups that are pairs of antenna elements, i.e., that consist of two antenna elements. In further examples, the following concepts are extendable to systems that operate with MIMO antenna elements groups that consist of any number of two (2) or more antenna elements. The below described components of the MIMO system with analog beam forming 100 include examples of components that make up an analog receiver front end.

As noted above, the present discussion describes beamforming that is created by combining two streams that have a phase delay introduced relative to one another in order to form destructive interference for RF signals received by the MIMO antenna that arrive at a particular angle. In general, it is to be understood that the principles applied herein are able to be applied to beam forming architectures that combine groups of signal streams, i.e., more than two signal streams from antenna elements with any defined spacing, to create one combined signal. In such examples that combine groups of three or more antenna stream input, phase delays are introduced to two or more of the antenna stream inputs to create antenna receive patterns with notches at desired angles.

In the illustrated, MIMO system with analog beam forming 100, the respective antenna stream input of all but one of the antenna elements is passed through a respective phase shifter. In various examples, these phase shifters are able to be placed in an RF path, such as in the form of a time delay element to retard the RF signal by a desired amount, or in a down converted baseband path. A first phase shifter 110 receives the second antenna stream input 154 and produces a second phased shifted stream output 160. A second phase shifter 112 receives the third antenna stream input 156 and produces a third phased shifted stream output 162. A third phase shifter 114 receives the fourth antenna stream input 158 and produces a fourth phased shifted stream output 164. The first antenna stream input 152 produced by the first antenna element 102 in this illustrated example is not passed through a phase shifter. In examples that use MIMO antenna element groups that each combine the antenna stream inputs of more than two antenna elements, multiple phase shifters are able to process a particular antenna stream input to provide multiple iterations of the antenna stream input where each iteration is phased shifted by an amount that supports forming a desired receive antenna array pattern for the various combined signals that include a phase shifted version of that antenna stream input.

Each phase shifter receives a respective phase shift control input from a phase controller 196. The phase controller 196 in the illustrated example produces a first phase shift control input 191, a second phase shift control input 193, and a third phase shift control input 195. These phase shift control inputs control the amount of phase shift introduced by the phase shifter receiving that input. In some examples, all phase shifters receive the same phase shift command input value to cause them to introduce the same amount of phase shift into the RF signal it is processing. In further examples, the phase controller 196 is able to determine and send different values for the individual phase shift control inputs provided to the different phase shifters.

The MIMO system with analog beam forming 100 includes a set of signal combiners that each produced one combined signal. The illustrated MIMO system with analog beamforming 100 includes a first signal combiner 120, a second signal combiner 122, and a third signal combiner 124. Each signal combiner in the illustrated example operates to combine two (2) signals from different antenna elements within the MIMO antenna array 101 by adding those signals to produce a combined RF signal. In general, signal combiners in further examples are able to combine any number of signals within a MIMO antenna element group. Each signal combiner in the illustrated examples receives an antenna stream input from one antenna element and a phase shifted stream output from another antenna element. The first signal combiner 120 receives the first antenna stream input 152 and the second phase shifted stream output 160 to produce a first combined signal 170. The second signal combiner 122 receives the second antenna stream input 154 and the third phase shifted stream output 162 to produce a second combined signal 172. The third signal combiner 124 receives the third antenna stream input 156 and the fourth phase shifted stream output 164 to produce a third combined signal 174. The combination of phase shifters in this example produces a plurality of shifted stream outputs.

Because the illustrated example MIMO system with analog beam forming 100 combines signals from pairs of antenna elements within the MIMO antenna array 101, the number of combined signals is one (1) less than the total number of antenna elements present in the MIMO antenna array 101. The plurality of combined signals is provided to a MIMO receiver 190 via respective MIMO antenna inputs. The first combined signal 170 is provided to a first input 180, the second combined signal 172 is provided to a second input 182, and the third combined signal 174 is provided to a third input 184. The MIMO receiver 190 in an example processes these combined signals according to conventional MIMO processing techniques to produce a MIMO processing output dataset 194 via a MIMO receiver output 192. The MIMO processing output dataset 194 in various examples is able to include any combination of data concerning objects detected by the MIMO system, including the depicted distance and DOA data elements for each object.

In the illustrated example, the MIMO receiver 190 produces a received signal strength indication 198 that is provided to the phase controller 196. The received signal strength indication 198 provides an indication of the strength of signals that are received either individually or in combination with one another via the RF inputs into the MIMO receiver 190. In an example, the received signal strength indication 198 is used to support determination of a direction of arrival of a strong signal that is to be attenuated by configuring the phase shifters to create an antenna receive pattern that has a notch in the direction of receipt of that strong signal.

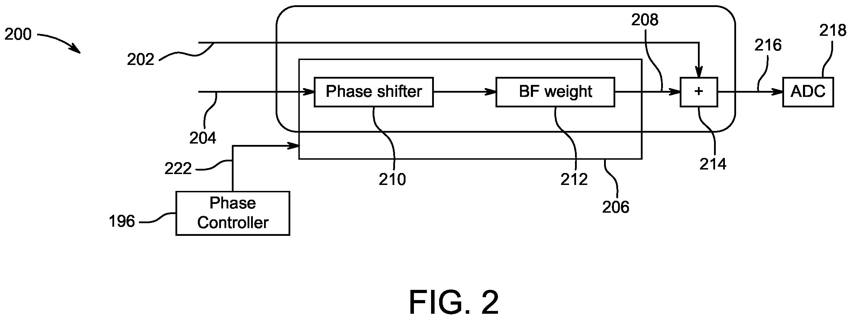

FIG. 2 illustrates a phase shifter and signal combiner 200, according to an example. The phase shifter and signal combiner 200 is an example of a configuration of devices used to implement the above described combination of the first phase shifter 110 with the first signal combiner 120. In some examples, the phase shifter and signal combiner 200 also implements the second phase shifter 112 with the second signal combiner 122, the third phase shifter 114 with the third signal combiner 124. As noted above, the present description is simplified by describing combined signals that are based on antenna stream inputs of MIMO antenna element groups that are pairs of antenna stream inputs, where one antenna stream input has an introduced phase delay. In further examples, the below described concepts are able to be applied to systems that form combined signals for MIMO antenna element groups that are based on more than two (2) antenna stream inputs where multiple antenna stream inputs have introduced phase delays.

The phase shifter and signal combiner 200 receives a first stream 202 and a second stream 204. The first stream 202 and the second stream 204 each corresponds to separate antenna stream inputs that are produced by separate receive antenna elements of the MIMO antenna array 101. In an example of the first phase shifter 110 and first signal combiner 120, the first stream 202 corresponds to the first antenna stream input 152 and the second stream 204 corresponds to the second antenna stream input 154.

The phase shifter and signal combiner 200 includes a phase shifter 206. Using the above example of the first phase shifter 110 and first signal combiner 120, the phase shifter 206 corresponds to the first phase shifter 110. The phase shifter 206 receives phase shifter command inputs 222. The phase shifter 206 includes a phase shifter element 210 and a Beam Forming (BF) weighting element 212. The phase shifter 206 receives a phase shifter command input 222 from the above described phase controller 196. In the illustrated example, the phase shifter command input 222 includes a phase shift amount command to control the amount of phase shift to be introduced by the phase shifter element 210 and also includes a weight command to control the amount of weighting that the BF weighting element 212 is to apply to the phase shifted stream output produced by the phase shifter element 210. The BF weighting element 212 in various examples is able to apply an amplitude weight to the phase shifted stream output to adjust the amplitude of the signal produced by the phase shifter element 210. In some examples, the BF weighting element 212 is able to attenuate that signal by an amount specified by the weight command contained in the phase shifter command input 222. In some examples, the BF weighting element 212 is able to amplify the signal by an amount specified by the weight command contained in the phase shifter command input 222. In further examples, the BF weighting element 212 is able to attenuate or amplify the signal by an amount specified by the weight command contained in the phase shifter command input 222.

The phase shifter 206 produces a phase shifted stream output 208 that is a version of the second stream 204 that is phase shifted and has had a weight applied. The phase shifted stream output 208 corresponds to the above described second phase shifted stream output 160. Similar instances of the phase shifter 206 are able to produce the third phase shifted stream output 162 or the fourth phase shifted stream output 164. The phase shifted stream output 208 is added to the first stream 202 by the signal combiner 214 to produce a combined signal 216. The combined signal 216 is provided to an ADC 218 in the illustrated example.

In some examples, the amplitude of the first stream 202 and the second stream 204 are substantially equal and applying the signal produced by the phase shifter element210 to the signal combiner 214 will result in substantially compete cancellation of the two signals at the combined signal 216. Such a cancellation in some examples is able to affect MIMO processing by a MIMO receiver receiving that combined signal 216. In such examples, attenuation the signal produced by the phase shifter element 210 prior to combining that signal with the first stream 202 by the signal combiner 214 advantageously obviates the substantially complete cancellation of the two signals and facilitates downstream MIMO processing of that signal. For example, programming the BF weighting element 212 to reduce signal amplitude by ten percent (10%) can result in attenuation of less than twenty decibels (20 dB) for signals arriving to the MIMO antenna with an angle in the vicinity of the notch in the antenna receive pattern created by the combination of the two signals to create the combined signal 216.

In various examples, the phase shifter 206 is able to be introduced into one of either an RF signal path of each receiver or into a baseband signal path for each received RF signal. In one example, the phase shifter 206 is able to introduce a time delay into the RF signal path of a respective phase shifted output prior to down conversion of the received RF signal to a baseband signal. In a further example, the phase shifter 206 is able to be introduce a phase shift into a down converted baseband signal of the phase shifted output.

The phase shifter and signal combiner 200 depicts elements in an example of an analog receiver front end. In the illustrated example, the analog receiver front end includes a phase shifter element 210, a BF weighting element 212, a signal combiner 214, and an ADC 218.

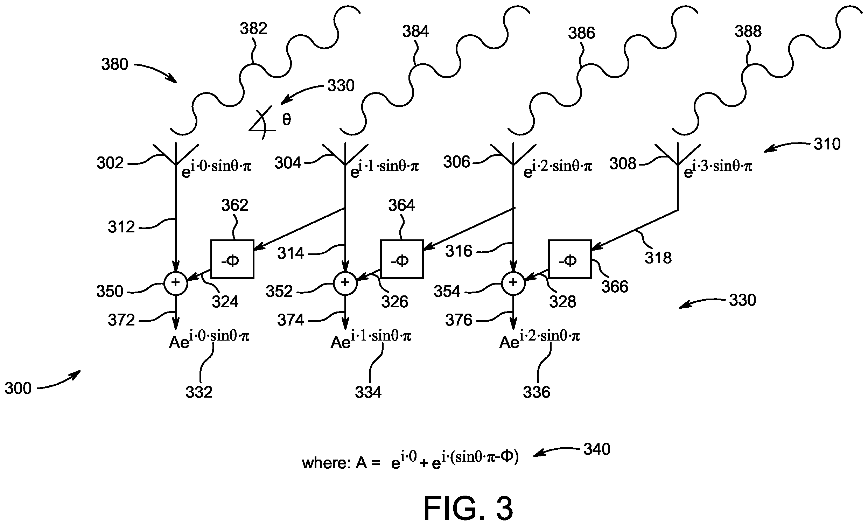

FIG. 3 illustrates a signal combining arrangement 300, according to an example. The signal combining arrangement 300 depicts a MIMO antenna array 310 that includes four (4) antenna elements, a first antenna element 302, a second antenna element 304, a third antenna element 306, and a fourth antenna element 308. Examples of these four (4) antenna elements are described above as, for example the first antenna element 102, the second antenna element 104, the third antenna element 106, and the fourth antenna element 108. In the illustrated example, the antenna elements in the antenna array are arranged in a line with spacings of one half of the wavelength of the RF signal the MIMO antenna array 310 is designed to receive.

The illustrated example presents a simplified case of receiving one RF signal 380 that arrives at the antenna array at an angle of θ 330. In general, a MIMO antenna array 310 is able to receive any number of RF signals that arrive from over a range of angles in view of the MIMO antenna array 310.

In this simplified case, each of the four antenna elements in the MIMO antenna array 310 is depicted as receiving a respective version of an RF signal 380 and producing a respective received RF signal that corresponds to that RF signal 380. In the illustrated example, the RF signal 380 is received with a DOA of θ 330. Due to the spacing of the antenna elements in the MIMO antenna array 310, each antenna element receives a version of the RF signal 380 that is delayed due to the additional distance traveled by that signal. The first antenna element 302 receives a first version 382 of the RF signal 380 and produces a first RF signal 312, the second antenna element 304 receives a second version 384 of the RF signal 380 and produces a second RF signal 314, the third antenna element 306 receives a third version 386 of the RF signal 380 and produces a third RF signal 316, and the fourth antenna element 308 receives a fourth version 388 of the RF signal 380 and produces a fourth RF signal 318.

These versions of the RF signal 380 received by the different antenna elements in this illustration only differ by the differences in phase received by the individual antenna elements. The received RF signals produced by antenna element "*n*," where *n* is between one (1) and four (4) in this example, is given by the mathematical equation: ${e}^{i ⋅ \left(n-1\right) sin θ ⋅ π}$

As described above, the systems and methods described herein operate to produce combined RF signals. Each such combined RF signal is created in the illustrated example by combining RF signals received by one antenna element in a MIMO antenna array 310 with a phase shifted version of the RF signal received by another antenna element in the MIMO antenna array 310 that is adjacent to that one antenna element. In the illustrated example, the second RF signal 314 is processed by a first phase shifter element 362, such as is described above, to produce a phase shifted second RF signal 324. The third RF signal 316 is processed by a second phase shifter element 364 to produce a phase shifted third RF signal 326, and the fourth RF signal 318 is processed by a third phase shifter element 366 to produce a phase shifted third RF signal 328. In the illustrated example, all three phase shifters introduce a phase shift angle of -Φ into the received RF signal it is processing.

The signal combining arrangement 300 illustrates the combination of the first RF signal 312 and the phase shifted second RF signal 324 by a first signal combiner 350 to produce a first combined RF signal 372 that is represented by a first combined RF signal formula 332. The combination of the second RF signal 314 and the phase shifted third RF signal 326 by a second signal combiner 352 to produce a second combined RF signal 374 that is represented by a second combined RF signal formula 334 and the combination of the third RF signal 316 and the phase shifted third RF signal 328 by a third signal combiner 354 to produce a third combined signal 376 that is represented by a third combined RF signal formula 336 are also depicted. In an example, each of these signal combiners operate to arithmetically their two input RF signals. Because these systems and method combine RF signals from two adjacent antenna elements, these systems and methods produce a number of combined RF signals that is one less than the number of antenna elements receiving the RF signals. The three (3) combined RF signals produced by this example, represented by *"n*,*"* where *n* is between one (1) and three (3), is given by the mathematical equation: ${Ae}^{i ⋅ \left(n-1\right) sin θ ⋅ π}$ *where:* $A = {e}^{\left(i⋅0\right)} + {e}^{i ⋅ \left(n-1\right) sin θ ⋅ π - Φ}$

In the above equations, the term "A," which is also depicted the signal combining arrangement 300, is referred to as an array factor and represents the phase shift *Φ* introduced by the phase shifters, including the first phase shifter element 362, the second phase shifter element 364, and the third phase shifter element 366, to each received RF signal.

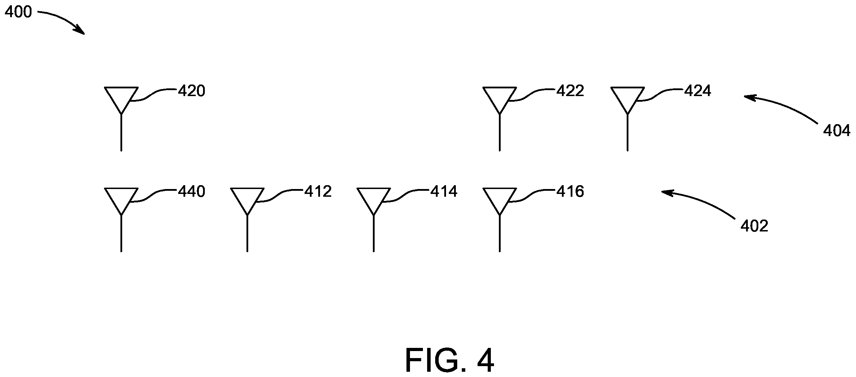

FIG. 4 illustrates a MIMO antenna array layout 400, according to an example. The illustrated MIMO antenna array layout 400 depicts a simple linear array of four (4) receive antenna elements 402 and a number of transmit antennas 404. The receive antenna elements 402 in the illustrated example include a first receive antenna element 410, a second receive antenna element 412, a third receive antenna element 414, and a fourth receive antenna element 416. The four (4) receive antenna elements 402 are each spaced at intervals from its adjacent receive antenna element by a distance of one half of the wavelength of the RF signal the antenna elements are designed to receive or transmit. The illustrated MIMO antenna array layout 400 depicts a relatively simple MIMO antenna array layout to simplify the relevant concepts of the presently described systems and methods. It is to be understood that the concepts described herein for the MIMO antenna array layout 400 are able to be applied to a MIMO antenna array of any complexity.

The MIMO antenna array layout 400 depicts a number of transmit antennas that are separated from one another by integer multiples one half of the wavelength of the RF signal the antennas are designed to transmit. The MIMO antenna array layout 400 includes a first transmit antenna 420 that in operation transmits a signal that is simultaneously received by all four (4) of the receive antenna elements.

The MIMO antenna array layout 400 also depicts a virtual receive antenna creating second transmit antenna 422 and a conventionally located second transmit antenna 424. In an example, a MIMO antenna array is able to include only the first transmit antenna 420 and one of either the virtual receive antenna creating second transmit antenna 422 or the conventionally located second transmit antenna 424.

The depicted MIMO antenna array layout 400 depicts the conventionally located second transmit antenna 424 as being horizontally located one half wavelength beyond the fourth receive antenna element 416. A conventional MIMO antenna array with four (4) receive antenna elements and two (2) transmit antennas, which is referred to as a 2X4 MIMO antenna array, is able to be realized by combining the four (4) receive antenna elements 402 with the first transmit antenna 420 and the conventionally located second transmit antenna 424.

The presently described systems and methods in some examples utilize a beamforming 2X4 MIMO array that advantageously combines the four (4) receive antenna elements 402 with the first transmit antenna 420 and the virtual receive antenna forming second transmit antenna 422. The virtual receive antenna forming second transmit antenna 422 in the present example is horizontally located above the fourth receive antenna element 416. The position of the virtual receive antenna forming second transmit antenna 422 in this example allows the combining of the output of the fourth receive antenna element 416 with a phase shifted output of the first receive antenna element 410 while receiving signals transmitted by the virtual receive antenna forming second transmit antenna 422. This arrangement thus allows for the production of six (6) combined RF signal outputs to a MIMO receiver when using a 2X4 MIMO antenna array physically configured with the virtual receive antenna forming second transmit antenna 422 located above the fourth receive antenna element 416.

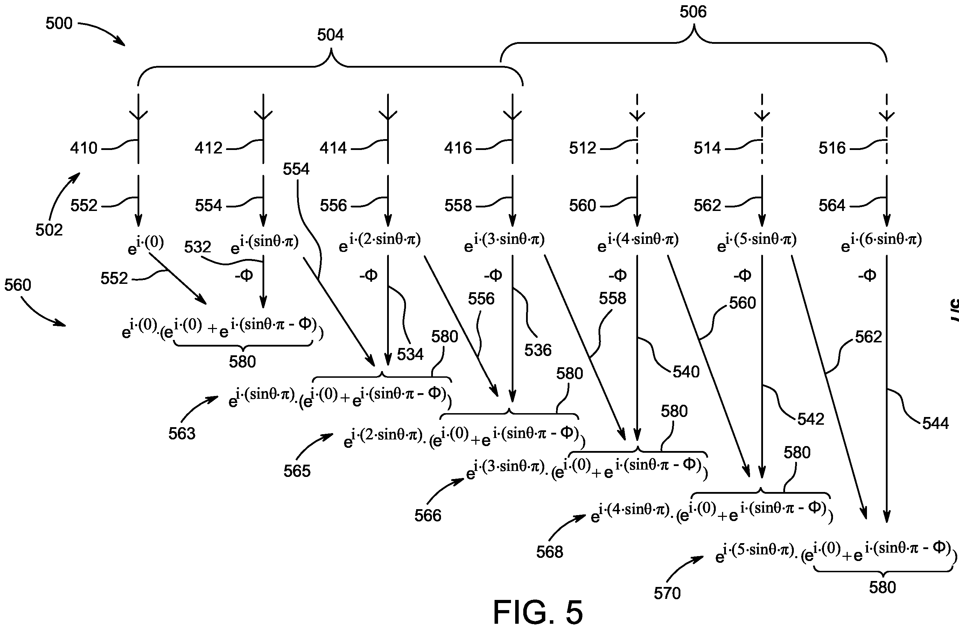

FIG. 5 illustrates a 2X4 MIMO antenna array RF combining arrangement 500, according to an example. The 2X4 MIMO antenna array RF combining arrangement 500 depicts signal combining arrangements for a 2X4 MIMO antenna array such as is depicted above with regards to the MIMO antenna array layout 400 with the virtual receive antenna forming second transmit antenna 422 but not utilizing the conventionally located second transmit antenna 424. The 2X4 MIMO antenna array RF combining arrangement 500 illustrates the RF signals produced by the MIMO antenna array layout 400 when simultaneously receiving signals that are transmitted by both the first transmit antenna 420 and the virtual receive antenna forming second transmit antenna 422.

The 2X4 MIMO antenna array RF combining arrangement 500 depicts a set of receive antenna elements 502. With reference to the above described MIMO antenna array layout 400, the set of receive antenna elements 502 includes a first MIMO antenna subset 504 that includes the first receive antenna element 410 that produces a first received RF signal 552, the second receive antenna element 412 and produces a second received RF signal 554, the third receive antenna element 414 and produces a third received RF signal 556, and the fourth receive antenna element 416 and produces a fourth received RF signal 558. The 2X4 MIMO antenna array RF combining arrangement 500 illustrates the RF outputs produced by the four (4) antenna elements of the first MIMO antenna subset 504 when receiving the RF signal that corresponds to the RF signal transmitted by the first transmit antenna 420.

A second MIMO antenna subset 506 depicts RF signals produced by the four (4) antenna elements of the MIMO antenna array when receiving the RF signal that corresponds to the RF signal transmitted by the virtual receive antenna forming second transmit antenna 422. The second MIMO antenna subset 506 depicts the fourth receive antenna element 416 along with three (3) "virtual" antenna elements that are used to illustrate the antenna relationships of the second receive antenna element 412, the third receive antenna element 414, and the fourth receive antenna element 416 when receiving the RF signal that corresponds to the RF signal transmitted by the virtual receive antenna forming second transmit antenna 422. In the illustrated example, the second subset second receive antenna element 512 corresponds to the first receive antenna element 410 and produces a fifth received RF signal 560 when receiving the RF signal that corresponds to the RF signal transmitted by the virtual receive antenna forming second transmit antenna 422. The second subset third receive antenna element 514 corresponds to the third receive antenna element 414 and produces a sixth received RF signal 562, and the second subset fourth receive antenna element 516 corresponds to the fourth receive antenna element 416 and produces a seventh received RF signal 564 when those receive antenna elements are receiving the RF signal that corresponds to the RF signal transmitted by the virtual receive antenna forming second transmit antenna 422.

Each of the received RF signals produced by the set of receive antenna elements 502, except for the first received RF signal 552, is used as a basis for a respective phase shifted stream output by phase shifting each received RF signal by -*Φ* in a manner similar to that described above. As an example, the second received RF signal 554 is phase shifted by -*Φ* to produce a second phase shifted received signal 532. The third received RF signal 556, the fourth received RF signal 558, the fifth received RF signal 560, the sixth received RF signal 562, and the seventh received RF signal 564 are similarly phase shifted by -*Φ* to produce a third phase shifted received RF signal 534, a fourth phase shifted received RF signal 536, a fifth phase shifted received RF signal 540, a sixth phase shifted received RF signal 542, and a seventh phase shifted received RF signal 544.

The 2X4 MIMO antenna array RF combining arrangement 500 illustrates the combination of received RF signals in a manner similar to that described above with regards to the signal combining arrangement 300. The 2X4 MIMO antenna array RF combining arrangement 500 includes the mathematical representation of the combined RF signals in a manner consistent with the above described signal combining arrangement 300. The first MIMO antenna subset 504 produces three (3) combined RF signals, represented by a first combined RF signal equation 561, a second combined RF signal equation 563, and a third combined RF signal equation 565. These combined RF signal equations are of the form described above with regards to the signal combining arrangement 300 with array factor 580, which corresponds to the above described array factor A 340, expanded.

The second MIMO antenna subset 506 produces an additional three (3) combined RF signals, represented by a fourth combined RF signal equation 566, a fifth combined RF signal equation 568, and a sixth combined RF signal equation 570. These combined RF signal equations are also of the form described above but have the elements of the array factor 580 expanded. It is to be noted that the fourth combined RF signal equation 566 is created by the combination of the fourth received RF signal 558, which is the received RF signal produced by the fourth receive antenna element 416 when receiving a transmitted signal transmitted by the virtual receive antenna forming second transmit antenna 422, with the phase shifted fifth phase shifted received RF signal 550.

The above described examples include MIMO antenna arrays that have antenna elements spaced at one half wavelength of the RF signal the MIMO antenna array is designed to receive. In one such example, the phase shift introduced by each phase shifter is equal to a common phase shift value, e.g., all phase shifters are set to the same phase shift value, so as to create a reduced receive array pattern in a determined direction. In further examples, the above described systems and methods are able to be applied to MIMO antenna arrays that are referred to a sparse arrays. In general, a sparse array has antenna elements that have antenna spacings that are greater than one half wavelength of the received RF Frequency for the antenna array. In various examples, sparse arrays are able to have unequally spaced receive antenna elements. In some examples, the concepts described above are able to be applied to MIMO antenna arrays that include sparse antenna arrays by allowing different values of phase shifts that are applied to the received RF signals to create the phase shifted version of those signals. In an example, a sparse array is able to implement processing described herein by selecting each respective phase shift control input in the set of phase shift control inputs that are proportional to antenna element separation distances within the sparse array to create a reduced receive array pattern.

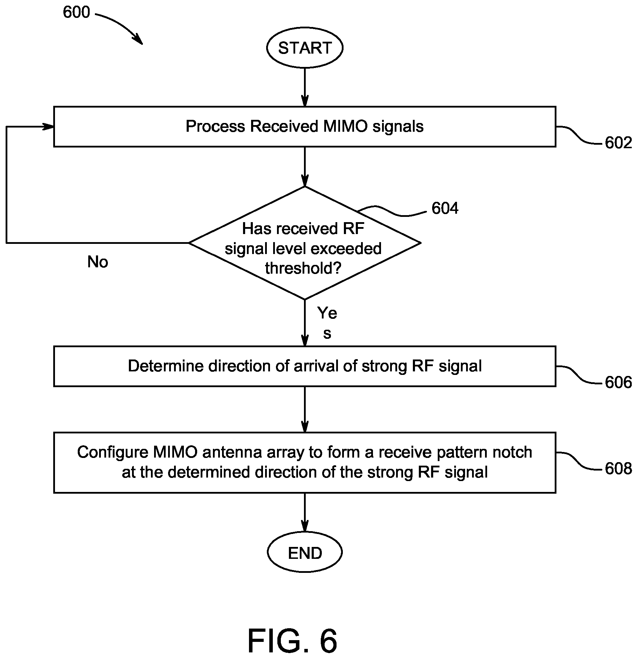

FIG. 6 illustrates an analog beamforming process 600, according to an example. The analog beamforming process 600 is an example of processing that controls an antenna array, such as the above described MIMO antenna array 101. The analog beamforming process 600 is an example of a method of processing antenna stream inputs received from a plurality of antenna elements within a MIMO antenna and operates to monitor the received signal strength of RF signals received by the MIMO antenna array 101 and, upon determination of receipt of a strong RF signal, , which is also able to be detected as a strong intermediate frequency (IF) signal or baseband signal, configures the antenna array to create a receive pattern that has a notch in a direction of the strong RF signal.

The analog beamforming process 600 processes, at 602, received MIMO signals. In an example, processing received MIMO signals includes measuring the received power of received signals. Such power measurements are able to include, for example, a measuring device, such as an RF power meter, that is configured to measure the received signal strength of one or more of the first antenna stream input 152, the second antenna stream input 154, the third antenna stream input 156, or the fourth antenna stream input 158. In various examples, measurement of the present power of received signals is able to be performed by measuring received RF signals or down converted signals, such as baseband signals, derived from those received RF signals.

A determination is made, at 604, as to whether a received RF signal level exceeded a threshold. In an example, a threshold level corresponds to a received signal strength that is drives receiver Analog to Digital Converters (ADC) to a predetermined level such as a proportion of the ADCs full scale input range. Exceeding such a threshold by a received RF signal indicates that the MIMO antenna array is receiving a strong RF signal. Based on a determination of receiving a strong RF signal, the presently described there is strong If it is determined that the received RF signal did not exceed a threshold, the analog beamforming process 600 returns to process, at 602, received MIMO signals.

When the received RF signal is determined to exceed the threshold, the processing operates to determine, at 606, a direction of arrival of the strong signal. The direction of arrival of a strong signal is able to be determined by any suitable technique. In some examples, a MIMO receiver is able to determine a direction of a strong signal and provide that direction to a processing element such as the above described phase controller 196.

In another example, the MIMO system with analog beamforming 100 is able to determine the direction of arrival of a strong signal by operating in a direction determination mode. In an example of such a direction determination mode, the MIMO system with analog beam forming 100 operates to create a plurality of beams by configuring the phase shifters with phase shift amounts that form receive array patterns in different directions. In some examples, different phase shifters are able to be configured with different phase shift amounts such that the at least some of the plurality of beams are formed in parallel. In further examples, at least some of these beams are able to be formed sequentially. The direction of arrival for the strong signal in such examples is able to be determined by measuring the power received by each of these beams with the direction of the beam receiving the strongest signal selected as the direction of arrival for the strong signal.

In an example of forming beams to identify the direction of arrival of the strong signal, a notch of the array factor is able to be set towards the direction of arrival of the strong signal based on a fixed relationship between the phase shifts that cause a receive array pattern with a peak direction and the phase shifts that cause a notch direction in that same direction. This relationship is a defined and based on the number of antennas forming the MIMO antenna element group. An example of this relationship can be illustrated with three (3) antennas. The difference in phase shift amounts to be introduced into antenna stream inputs that create a receive antenna pattern with a peak at a particular angle of arrival relative to the phase shift amounts to be introduced into those antenna stream inputs to create a notch at the same angle of arrival is three hundred and sixty (360) divided by the number of antenna stream inputs, e.g., the example of three (3) antenna stream input yields 360/3=120 degrees of added phase shift producing the angle of arrival with the observed peak to produce a notch at the same angle of arrival as the peak. As an example, assume a strong signal is observed with phase shift values of positive twenty degrees (+20°) programmed into the above-described phase shifters for MIMO antenna element groups of three antenna stream inputs. In that example, a notch is able to be formed by programming the phase shifters to values of 20-120=-100 degrees.

The MIMO antenna array is configured, at 608, to form a receive pattern that has a notch at the determined direction of arrival of the strong RF signal. In an example, the phase shift values of each phase shifter, such as the above described first phase shifter 110, second phase shifter 112, and third phase shifter 114, is set according to values that will result in the receive antenna pattern for the MIMO antenna array having a notch in the determined direction of arrival of the strong RF signal. Such a notch in the receive pattern of the MIMO antenna array is a portion of the MIMO antenna array's receive array pattern that has less antenna receive gain in the determined direction. The analog beamforming process 600 then ends.

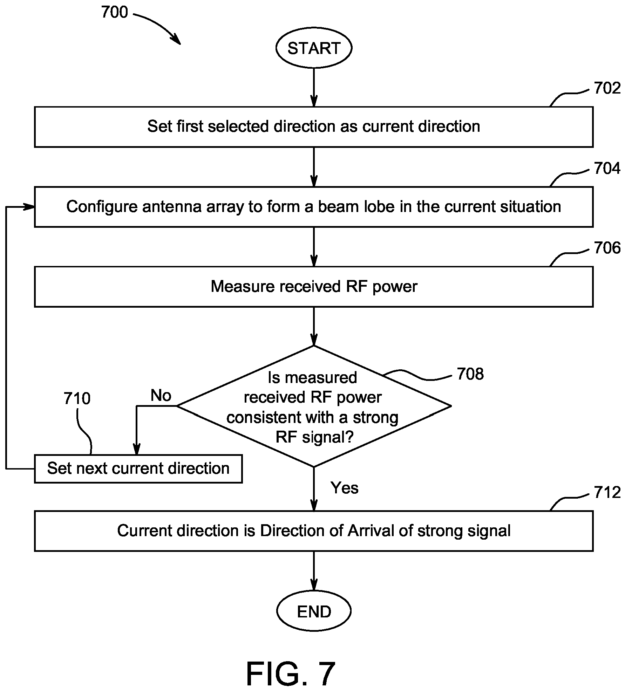

FIG. 7 illustrates a strong signal direction of arrival determination process 700, according to an example. The strong signal direction of arrival determination process 700 is an example of a process performed as part of the analog beamforming process 600 to determine the direction of a strong RF signal. In various examples, the presently described systems and methods operate with an initial step of determining a direction of arrival of a strong RF signal and then determine a configuration of a MIMO antenna array that includes phase shifters for each antenna element to create a receive pattern for the MIMO antenna array that has a notch at the determined direction of the received strong signal. The below described strong signal direction of arrival determination process 700 configures the MIMO antenna array to create a series of receive pattern that each has a strong main lobe, i.e., a direction of strong antenna receive gain relative to other directions. The total RF power received by each of the created receive patterns is measured and the direction of the main lobe with the strongest received power is determined to be the direction of the strong RF signal. In an example, the phase shifting values set for the while the MIMO antenna array is configured direction of the main lobe is changed

In an example, a number of sets of phase shift control input values are created where each set of phase shift control input values creates, when provided to the phase shifters described above, a respective sweeping increased receive array pattern with increased gain in a respective direction. For example, four sets of phase shift control input values are able to be created in parallel where each set creates a receive array pattern with increased gain in respective directions that are equally separated from one another across the range of receive angles available to a MIMO receive antenna. In an example, a plurality of sweeping phase shift control inputs is provided to a plurality of phase shifters, wherein each respective sweeping phase shift control input in the plurality of sweeping phase shift control inputs is provided to the plurality of phase shifters over a respective time period and creates a respective sweeping increased receive array pattern with increased gain in a respective direction.

The strong signal direction of arrival determination process 700 sets, at 702, a first selected direction as current direction. Such a first selected direction in an example is a predefined value that is a direction in which a receive pattern for the MIMO antenna array will have a main lobe or an increased receive array pattern with increased gain in a respective direction.

The MIMO antenna array is configured, at 704, to form an antenna pattern with a main lobe in the current direction. This configuration in an example is performed by setting the phase shifters for the MIMO antenna array 101 to values that will create this antenna receive pattern. In an example, this antenna receive pattern is one of the sweeping increased receive array pattern with increased gain in respective directions that is discussed above.

The received RF power is measured, at 706. This total received RF power is determined for combined RF signals that are produced by combining an RF signal received by one antenna element in the MIMO antenna array with a phase delayed RF signal for an RF signal received by an adjacent antenna element in the MIMO antenna array. This is an example of determining, when each respective sweeping phase shift control input is provided to the plurality of phase shifters, a respective received RF signal power level contained within at least one respective direction determining combined signal when each respective direction determining combined signal comprises: a direction determining respective signal stream within the plurality of signal streams, and a respective phase shifted direction determining stream output provided by a respective phase shifter receiving a second respective signal stream that is different from the first respective signal stream.

A determination is made, at 708, as to whether the measured received RF power consistent with a strong RF signal. This determination in an example is based on comparing the measured received RF is above a threshold. This is an example of determining the direction of the detected strong signal based on a respective direction of a respective sweeping increased receive array pattern that has a highest respective received RF signal power level.

If the determination is that the measured received RF power is not consistent with a strong RF signal, a next current direction is set, at 710. In some examples, the next current direction is determine based on an angular increment from the present current direction. After setting the next current direction, the strong signal direction of arrival determination process 700 returns to configuring, at 704, the MIMO antenna array to form a beam lobe at the current direction.

If determination is that the measured received RF power is consistent with a strong RF signal, the current direction is set, at 712, as the Direction of Arrival of the strong RF signal. The strong signal direction of arrival determination process 700 then ends.

The above described operations of the strong signal direction of arrival determination process 700 includes examples of processing performed by an antenna phase controller that is configured to, when operating, determine the direction of the detected strong signal by at least providing a plurality of sweeping phase shift control inputs where each respective sweeping phase shift control input in the plurality of sweeping phase shift control inputs is applied to the plurality of antenna elements over a respective time period and creates a respective sweeping reduced receive array pattern with a reduced antenna receive gain in a respective direction; and determining, when each respective sweeping phase shift control input is applied to the plurality of antenna elements, a respective received RF signal power contained within at least one of the respective combined signal. In some examples, this processing is performed such that the antenna phase controller provides each respective phase shift control input during at least one frame of a MIMO transmission received by the plurality of antenna elements.

In an example, an analog receiver front end for a Multiple Input Multiple Out (MIMO) receiver has a plurality of antenna stream inputs 152, 154, 156, 158 receiving a plurality of signal streams produced by a plurality of antenna elements 102, 104, 106, 108 within a MIMO receive antenna 101, wherein each respective antenna stream input receives a respective signal stream. A plurality of phase shifters 110, 112, 114 producing a plurality of phase shifted stream outputs 160, 162, 164, wherein each respective phase shifter in the plurality of phase shifters receives a respective signal stream from a respective antenna stream input 152, 154, 156, receives a respective phase shift control input 191, 193, 195, within a set of phase shift control inputs, and provides a respective phase shifted stream output 160, 162, 164 that is phase shifted relative to the respective signal stream based on an amount specified in the respective phase shift control input. A plurality of signal combiners 120, 122, 124 producing a plurality of combined signals 170, 172, 174 for input into a MIMO receiver 190, wherein each signal combiner in the plurality of signal combiners produces a respective combined signal 170, 172, 174 for a respective pair of antenna stream inputs within the plurality of antenna stream inputs, wherein each respective combined signal comprises a combination of: a first respective signal stream 202 within the plurality of signal streams, and a respective phase shifted stream output 208 provided by a respective phase shifter receiving a second respective signal stream 202 that is different from the first respective signal stream. An antenna phase controller 196 produces the set of phase shift control inputs 191, 193, 195, wherein the set of phase shift control inputs creates a reduced receive array pattern for the MIMO receive antenna in a direction of a detected strong signal for each respective pair of antenna elements.

In an example, a method of processing antenna stream inputs received from a plurality of antenna elements within a Multiple Input Multiple Out (MIMO) antenna 600 includes receiving a plurality of signal streams 152, 154, 156, 158 produced by a plurality of antenna elements within a MIMO receive antenna 152, 154, 156, 158, wherein each respective antenna stream input receives a respective signal stream. A respective phase shifted stream output within a plurality of phase shifted stream outputs 160, 162, 164 are provided, wherein each respective phase shifted stream output is based on a respective signal stream from a respective antenna stream input and a respective phase shift control input within a set of phase shift control inputs, wherein the respective phase shifted stream output is phase shifted relative to the respective signal stream based on an amount specified in the respective phase shift control input 191, 193, 195. A plurality of combined signals for input into a MIMO receiver 170, 172, 174 are produced, wherein each respective combined signal within the plurality of combined signals comprises a combination of: a first respective signal stream 202 within the plurality of signal streams, and a respective phase shifted stream output 208 within the plurality of phase shifted stream outputs provided by a respective phase shifter receiving a second respective signal stream 204 that is different from the first respective signal stream. The set of phase shift control inputs 191, 193, 195 is produced, wherein the set of phase shift control inputs creates a reduced receive array pattern for the MIMO receive antenna in a direction of a detected strong signal for each respective pair of antenna elements.

In one or more embodiments, each respective phase shifted stream output is based on a time delay introduced into an RF signal path of the respective phase shifted stream output. In one or more embodiments, the phase shifted stream output is based on a phase shift introduced into a baseband signal path of the phase shifted stream output.

In one or more embodiments, the plurality of antenna elements further receive a respective weight command, the method further comprises applying a respective amplitude weight to the respective phase shifted stream output based on the respective weight command.

In one or more embodiments, the plurality of antenna elements are arranged with a spacing between adjacent antenna elements of one half wavelength of a signal received by the MIMO receive antenna, wherein each respective phase shift control input in the set of phase shift control inputs is equal to a common phase shift value.

In one or more embodiments, the plurality of antenna elements are arranged as a sparse array, wherein each respective phase shift control input in the set of phase shift control inputs is proportional to antenna element separation distances within the sparse array to create the reduced receive array pattern.

In one or more embodiments, determining the direction of the detected strong signal comprises: creating a plurality of sweeping phase shift control inputs to a plurality of phase shifters, wherein each respective sweeping phase shift control input in the plurality of sweeping phase shift control inputs is provided to the plurality of phase shifters over a respective time period and creates a respective sweeping increased receive array pattern with increased gain in a respective direction; determining, when each respective sweeping phase shift control input is provided to the plurality of phase shifters, a respective received RF signal power level contained within at least one respective direction determining combined signal when each respective direction determining combined signal comprises: a direction determining respective signal stream within the plurality of signal streams, and a respective phase shifted direction determining stream output provided by a respective phase shifter receiving a second respective signal stream that is different from the first respective signal stream; and determining the direction of the detected strong signal based on a respective direction of a respective sweeping increased receive array pattern that has a highest respective received RF signal power level.

In one or more embodiments, determining the set of phase shift control inputs comprises receiving, from a MIMO receiver, a direction of a detected strong signal. In one or more such embodiments, providing each respective phase shift control input is performed during at least one frame of a MIMO transmission received by the plurality of antenna elements.

The term "coupled", as used herein, is defined as "connected" and encompasses the coupling of devices that may be physically, electrically or communicatively connected, although the coupling may not necessarily be directly and not necessarily be mechanical. The term "configured to" describes hardware, software, or a combination of hardware and software that is adapted to, set up, arranged, built, composed, constructed, designed, or that has any combination of these characteristics to carry out a given function. The term "adapted to" describes hardware, software, or a combination of hardware and software that is capable of, able to accommodate, to make, or that is suitable to carry out a given function.

The terms "a" or "an", as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to embodiments containing only one such element, even when the same claim includes the introductory phrases "one or more" or "at least one" and indefinite articles such as "a" or "an". The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The term "coupled", as used herein, is not intended to be limited to a direct coupling or a mechanical coupling, and that one or more additional elements may be interposed between two elements that are coupled.

As will be appreciated by one skilled in the art, aspects of the present disclosure may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit" or "system".

The one or more embodiments may be a system, a method, and/or a computer program product. The computer program product may include a computer-readable storage medium (or media) having computer readable program instructions thereon for causing a processor to carry out aspects of the embodiments described herein.

In one embodiment, the computer program product includes a non-transitory storage medium readable by a processing circuit and storing instructions for execution by the processing circuit for performing a method. The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media, e.g., light pulses passing through a fiber-optic cable), or electrical signals transmitted through a wire.

Computer-readable program instructions for carrying out operations of the embodiments described herein may be assembler instructions, instruction-set-architecture (ISA) instructions, machine instructions, machine-dependent instructions, microcode, firmware instructions, state-setting data, or either source code or object code written in any combination of one or more programming languages, including an object-oriented programming language such as Smalltalk, C++, and conventional procedural programming languages, such as the "C" programming language or similar programming languages. The computer-readable program instructions may execute entirely or partly on a user's computer or entirely or partly on a remote computer or server. In the latter scenario, the remote computer may be connected to the user's computer through any type of network, including a local area network (LAN), a wide area network (WAN), an Ultra-Wide Band (UWB) network, or the connection may be made to an external computer (for example, through the Internet). In some embodiments, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the embodiments described herein.

Aspects of one or more embodiments of the present disclosure are described herein with reference to flowchart illustrations and/or block diagrams of methods, apparatus (systems), and computer program products. Each block of the flowchart illustrations and/or block diagrams, and combinations of blocks in the flowchart illustrations and/or block diagrams, can be implemented by computer readable program instructions.

These computer-readable program instructions may be provided to a processor of a general-purpose computer, special purpose computer, or other programmable data processing apparatus to produce a machine, such that the instructions, which execute via the processor of the computer, create means for implementing the functions/acts specified in the flowchart and/or block diagram blocks. These computer-readable program instructions may also be stored in a computer-readable storage medium that can direct a computer to function in a particular manner, such that the computer-readable storage medium having instructions stored therein comprises an article of manufacture including instructions which implement aspects of the function/act specified in the flowchart and/or block diagram block or blocks.

The description of the present disclosure has been presented for purposes of illustration and description but is not intended to be exhaustive or limited to the embodiments in the form disclosed. Many modifications and variations will be apparent to those of ordinary skill in the art without departing from the scope and spirit of the present disclosure. One or more embodiments were chosen and described in order to best explain the principles of the inventive subject matter and the practical application and to enable others of ordinary skill in the art to understand the inventive subject matter for various embodiments with various modifications as are suited to the particular use contemplated.

Although specific embodiments have been disclosed, those having ordinary skill in the art will understand that changes can be made to the specific embodiments without departing from the spirit and scope of the present disclosure. The scope of the inventive subject matter is not to be restricted, therefore, to the specific embodiments, and it is intended that the appended claims cover any and all such applications, modifications, and embodiments within the scope of the inventive subject matter.

## Claims

1. An analog receiver front end for a Multiple Input Multiple Out, MIMO, receiver, comprising:
a plurality of antenna stream inputs receiving a plurality of signal streams produced by a plurality of antenna elements within a MIMO receive antenna, wherein each respective antenna stream input receives a respective signal stream;
a plurality of phase shifters producing a plurality of phase shifted stream outputs, wherein each respective phase shifter in the plurality of phase shifters receives a respective signal stream from a respective antenna stream input, receives a respective phase shift control input within a set of phase shift control inputs, and provides a respective phase shifted stream output that is phase shifted relative to the respective signal stream based on an amount specified in the respective phase shift control input;
a plurality of signal combiners producing a plurality of combined signals for input into a MIMO receiver, wherein each signal combiner in the plurality of signal combiners produces a respective combined signal for a respective pair of antenna stream inputs within the plurality of antenna stream inputs, wherein each respective combined signal comprises a combination of:
a first respective signal stream within the plurality of signal streams, and
a respective phase shifted stream output provided by a respective phase shifter receiving a second respective signal stream that is different from the first respective signal stream; and
an antenna phase controller producing the set of phase shift control inputs, wherein the set of phase shift control inputs creates a reduced receive array pattern for the MIMO receive antenna in a direction of a detected strong signal for each respective pair of antenna elements.

2. The analog receiver front end of claim 1, wherein each signal combiner in the plurality of signal combiners further produces the respective combined signal for a respective group of antenna stream inputs within the plurality of antenna stream inputs, wherein each respective combined signal comprises a combination of:
a first respective signal stream within the plurality of signal streams, and
a plurality of respective phase shifted stream outputs provided by respective phase shifters receiving respective signal streams that are different from the first respective signal stream.

3. The analog receiver front end of claim 1 or 2, further comprising: the MIMO receiver, wherein the MIMO receiver receives the plurality of combined signals and is configured to, when operating, perform MIMO processing based on the plurality of combined signals.

4. The analog receiver front end of any preceding claim, wherein each respective phase shifted stream output is based on a time delay introduced into an RF signal path of the respective phase shifted output.

5. The analog receiver front end of any preceding claim, wherein each respective phase shifted stream output is based on a respective phase shift introduced into a baseband signal path of the respective phase shifted stream output.

6. The analog receiver front end of any preceding claim, wherein each respective phase shifter in the plurality of phase shifters further comprises a respective signal weighting element, wherein each respective phase shifter further receives a respective weight command, and wherein each respective signal weighting element applies a respective amplitude weight to the respective phase shifted stream output based on the respective weight command.

7. The analog receiver front end of any preceding claim, wherein antenna elements in the plurality of antenna elements in the MIMO receive antenna are arranged with a spacing between adjacent antenna elements of one half wavelength of a signal processed by the MIMO receiver,
wherein each respective phase shift control input in the set of phase shift control inputs is equal to a common phase shift value.

8. The analog receiver front end of any preceding claim, wherein the plurality of antenna elements in the MIMO receive antenna are arranged as a sparse array,
wherein each respective phase shift control input in the set of phase shift control inputs is proportional to antenna element separation distances within the sparse array to create the reduced receive array pattern.

9. The analog receiver front end of any preceding claim, wherein the antenna phase controller is configured to, when operating, determine the direction of the detected strong signal by at least:
providing a plurality of sweeping phase shift control inputs to the plurality of phase shifters, wherein each respective sweeping phase shift control input in the plurality of sweeping phase shift control inputs is provided to the plurality of phase shifters over a respective time period and creates a respective sweeping increased receive array pattern with increased gain in a respective direction;
determining, when each respective sweeping phase shift control input is provided to the plurality of phase shifters, a respective received RF signal power level contained within respective combined signals produced by at least one signal combiner within the plurality of signal combiners; and
determining the direction of the detected strong signal based on a respective direction of a respective sweeping increased receive array pattern that has a highest respective received RF signal power level.

10. The analog receiver front end of any preceding claim, wherein the antenna phase controller is configured to, when operating, determine the set of phase shift control inputs by at least receiving, from a MIMO receiver, a direction of a detected strong signal.

11. The analog receiver front end of claim 10, wherein the antenna phase controller provides each respective phase shift control input during at least one frame of a MIMO transmission received by the plurality of antenna elements.

12. A method of processing antenna stream inputs received from a plurality of antenna elements within a Multiple Input Multiple Out, MIMO, antenna, the method comprising:
receiving a plurality of signal streams produced by a plurality of antenna elements within a MIMO receive antenna, wherein each respective antenna stream input receives a respective signal stream;
providing a respective phase shifted stream output within a plurality of phase shifted stream outputs, wherein each respective phase shifted stream output is based on a respective signal stream from a respective antenna stream input and a respective phase shift control input within a set of phase shift control inputs,
wherein the respective phase shifted stream output is phase shifted relative to the respective signal stream based on an amount specified in the respective phase shift control input;
producing a plurality of combined signals for input into a MIMO receiver, wherein each respective combined signal within the plurality of combined signals comprises a combination of:
a first respective signal stream within the plurality of signal streams, and
a respective phase shifted stream output within the plurality of phase shifted stream outputs provided by a respective phase shifter receiving a second respective signal stream that is different from the first respective signal stream; and
producing the set of phase shift control inputs, wherein the set of phase shift control inputs creates a reduced receive array pattern for the MIMO receive antenna in a direction of a detected strong signal for each respective pair of antenna elements.

13. The method of claim 12, wherein each respective phase shifted stream output is based on a time delay introduced into an RF signal path of the respective phase shifted stream output.

14. The method of claim 12, wherein the phase shifted stream output is based on a phase shift introduced into a baseband signal path of the phase shifted stream output.

15. The method of any of claims 12 to 14, wherein the plurality of antenna elements further receive a respective weight command, the method further comprises applying a respective amplitude weight to the respective phase shifted stream output based on the respective weight command.
